# FASCICULE DE BREVET EUROPEEN

(11) **EP 4 427 965 B1**
(45) Date de publication et mention de la délivrance du brevet: **22.07.2026**
(21) Numéro de dépôt: 24160610.2
(22) Date de dépôt: 29.02.2024
(51) Int. Cl.: B60L 3/00, B60L 53/16, H01R 13/42, H01R 13/56, H01R 13/62, B60L 3/04, H01R 13/02, H01R 13/447, H01R 13/70, H01R 31/06, H01R 43/26, H01R 13/453, H01R 107/00, H01R 13/703

(54) **SYSTÈME DE CONNEXION SÉCURISÉ D'UNE PRISE DE CHARGEMENT POUR VÉHICULE AUTOMOBILE**
SYSTEM ZUR SICHEREN VERBINDUNG EINER LADEDOSE FÜR EIN KRAFTFAHRZEUG
SYSTEM FOR SECURELY CONNECTING A CHARGING SOCKET FOR A MOTOR VEHICLE

(30) Priorité: 10.03.2023 FR 2302241
(43) Date de publication de la demande: 11.09.2024
(73) Titulaire: Ampere SAS, 92100 Boulogne-Billancourt (FR)
(72) Inventeur: STEFANI, Gérard, 78084 Guyancourt Cedex (FR)
(74) Mandataire: Renault Group

(56) Documents cités:
- AU-A1- 2020 394 897
- DE-A1- 102019 203 193
- US-A1- 2021 194 193
- US-A1- 2022 077 638
- US-A1- 2022 302 642
- US-B2- 10 003 157

## Description

La présente invention concerne le domaine des systèmes de chargement électrique, et plus particulièrement de tels systèmes de chargement électrique de véhicule électrique ou hybride.

Les véhicules électriques ou hybrides sont des véhicules aptes à assurer le transport de passagers et/ou de marchandises. Ces véhicules comprennent un moteur électrique apte à convertir une énergie électrique stockée dans un équipement de stockage d'énergie, tel que des batteries, en une énergie mécanique apte à mettre le véhicule en mouvement, par exemple en mettant de roues du véhicule en rotation.

Lors du fonctionnement du véhicule, l'énergie stockée dans les batteries diminue, ces dernières nécessitent alors d'être rechargées par l'utilisateur. Des équipements de chargement, tels que des bornes murales, également connues sous l'appellation anglophone de « Wallbox », permettent de recharger les batteries du véhicule. Ces bornes murales peuvent comprendre un câble de chargement fourni avec la borne murale et destiné à être connecté au véhicule afin de recharger les batteries.

Selon différentes normes, telles que la norme NF C61-314, et pour protéger l'utilisateur d'un risque d'électrocution, ces câbles de chargement comprennent, au niveau du terminal de connexion destiné à être connecté au véhicule, un dispositif de contrôle protégeant l'utilisateur en cas d'introduction d'un objet conducteur dans des cavités de connexion du terminal de connexion.

Il est connu d'équiper le terminal de connexion de volets de protection venant obstruer les cavités de connexion ou d'éléments mobiles empêchant la connexion électrique entre un réseau électrique et le terminal de connexion.

Il est connu de US 2022/302642 A1 un connecteur constitué d'un premier et d'un second connecteur, montés et connectés électriquement l'un à l'autre. Il est connu de AU 2020 394 897 A1 une prise électrique de sécurité comprenant une prise femelle recevant, lors de l'utilisation, la partie mâle d'une fiche électrique afin d'établir une connexion électrique. Il est connu de US 2022/077638 A1 une prise de courant comprenant une première face de connecteur et une seconde face de connecteur comportant au moins un ensemble de contact qui peut être fixé ou fixé de manière amovible à celle-ci.

Toutefois, les solutions existantes ne sont pas satisfaisantes car elles comprennent de nombreux éléments articulés réduisant la fiabilité du dispositif de contrôle ou de nombreuses zones de contacts au niveau desquelles des éléments viennent en contact les uns avec les autres générant des forces de frottement participant à détériorer le dispositif de contrôle par sa propre mise en œuvre.

La présente invention se propose de pallier au moins certains inconvénients de l'art antérieur au moyen d'un système de connexion destiné à se connecter électriquement à un véhicule automobile, le système de connexion comprenant au moins un organe de liaison formé d'un premier élément de liaison configuré pour être connecté à un réseau électrique et d'un deuxième élément de liaison configuré pour être connecté à un terminal électrique du véhicule automobile, le système de connexion comprenant au moins un dispositif de contrôle d'une connexion électrique entre au moins l'organe de liaison électrique et le terminal, le dispositif de contrôle comprenant au moins un plateau mobile en rotation et un organe de mise en mouvement du plateau mobile, le plateau mobile étant disposé entre le premier élément de liaison et le deuxième élément de liaison, le plateau mobile comprenant au moins une portion électriquement isolante et une portion électriquement conductrice, le plateau mobile étant apte à prendre une première position dans laquelle la portion électriquement isolante est disposée entre le premier élément de liaison et le deuxième élément de liaison et une deuxième position dans laquelle la portion électriquement conductrice est disposée entre le premier élément de liaison et le deuxième élément de liaison, la distance de séparation séparant une extrémité du premier élément de liaison et une extrémité du deuxième élément de liaison est supérieure à une épaisseur de la portion électriquement isolante du plateau mobile.

L'organe de mise en mouvement est un élément du système de connexion apte à se déplacer selon un axe de translation. Ce déplacement de l'organe de mise en mouvement est généré par l'introduction d'un élément, tel qu'un terminal d'une prise de réception du véhicule, dans par exemple un tube du système de connexion associé à l'organe de mise en mouvement. Le déplacement de l'organe de mise en mouvement permet de déplacer le plateau mobile entre la première position, dans laquelle les organes de liaison électrique ne sont pas aptes à alimenter électriquement les terminaux de la prise de réception du véhicule, et la deuxième position, dans laquelle les organes de liaison électrique du système de connexion sont aptes à alimenter électriquement les terminaux de la prise de réception du véhicule automobile.

L'épaisseur de la portion électriquement isolante est mesurée parallèlement à l'axe de translation de l'organe de mise en mouvement du plateau mobile. Plus précisément, le plateau mobile présente une face en regard du deuxième élément de liaison et une face en regard du premier élément de liaison. L'épaisseur du plateau mobile correspond au segment parallèle à l'axe de translation de l'organe de mise en mouvement joignant la face en regard du premier élément de liaison et la face en regard du deuxième élément de liaison. Il convient de noter que cette épaisseur de la portion électriquement isolante est mesurée sur une partie du plateau mobile ne comprenant pas de portion électriquement conductrice.

On comprend que lorsque le plateau mobile est formé d'un matériau isolant la portion électriquement isolante forme l'ensemble du plateau mobile. Ce plateau mobile comprend alors, le cas échéant, au moins un orifice dans lequel est ménagé la portion électriquement conductrice. Ainsi, l'épaisseur de la portion électriquement isolante correspond à l'épaisseur du plateau mobile.

Les extrémités des éléments de liaisons entre lesquelles est mesurée la distance de séparation entre le premier élément de liaison et le deuxième élément de liaison sont les extrémités desdits éléments de liaison en regard du plateau mobile, ou en d'autres termes, proximales du plateau mobile.

Selon une caractéristique de l'invention, l'extrémité du premier élément de liaison et l'extrémité du deuxième élément de liaison sont au contact de la portion électriquement conductrice lorsque le plateau mobile est dans sa deuxième position. Ce contact entre les extrémités des éléments de liaison et la portion électriquement conductrice permet d'assurer le passage d'un courant électrique du premier élément de liaison au deuxième élément de liaison lorsque le plateau mobile est dans sa deuxième position. On comprend que dans la première position du plateau mobile les extrémités des éléments de liaison ne sont pas au contact de ladite portion électriquement conductrice.

Selon une caractéristique de l'invention, la distance entre l'extrémité du premier élément de liaison et la portion électriquement isolante du plateau mobile et/ou la distance entre l'extrémité du deuxième élément de liaison et la portion électriquement isolante du plateau mobile est d'au moins 1 mm. Une telle distance permet de s'assurer que lors de la rotation du plateau mobile l'extrémité des éléments de liaison n'entre pas au contact de la portion électriquement isolante du plateau mobile. En effet, ce contact des extrémités des éléments de liaison avec le plateau mobile lors de la rotation de ce dernier génère des forces de frottement qui peuvent détériorer le plateau mobile et plus spécifiquement la portion électriquement isolante. Il convient de noter que cette distance est mesurée entre l'extrémité des éléments de liaison et la portion électriquement isolante disposée directement en regard desdites extrémités des éléments de liaison. On comprend que cette distance est mesurée entre l'extrémités des éléments de liaison et la portion électriquement isolante parallèlement à l'axe principal.

Selon une caractéristique de l'invention, l'organe de mise en mouvement est apte à se déplacer le long d'un axe principal, le premier élément de liaison et le deuxième élément de liaison s'étendant parallèlement à l'axe principal. Plus spécifiquement le premier élément de liaison et le deuxième élément de liaison sont coaxiaux de telles sorte que dans la deuxième position du plateau mobile, lorsque le premier élément de liaison est en regard d'une portion électriquement conductrice, le deuxième élément de liaison est également au contact de ladite portion électriquement conductrice.

Selon une caractéristique de l'invention, la portion électriquement conductrice du plateau mobile est formée d'au moins une pastille conductrice logée dans l'épaisseur du plateau mobile, ladite pastille conductrice faisant saillie de part et d'autre de la portion électriquement isolante du plateau mobile. On comprend que la pastille conductrice est un élément distinct de la portion électriquement isolante. Cette pastille électriquement isolante est apte à faire circuler un courant du premier élément de liaison jusqu'au deuxième élément de liaison, par exemple pour recharger le véhicule automobile, ou du deuxième élément de liaison jusqu'au premier élément de liaison, par exemple pour recharger un réseau électrique d'une résidence au moyen du véhicule automobile.

Selon une caractéristique de l'invention, une épaisseur de la pastille conductrice est supérieure à la distance séparant une extrémité du premier élément de liaison et une extrémité du deuxième élément de liaison lorsque le plateau mobile est dans sa première position. On comprend que la distance entre le premier élément de liaison et le deuxième élément de liaison dans la première position du plateau mobile est inférieure à la distance entre le premier élément de liaison et le deuxième élément de liaison dans la deuxième position du plateau mobile.

Selon une caractéristique de l'invention, le premier élément de liaison comprend un chanfrein destiné à coopérer avec un chanfrein ménagé sur la pastille conductrice pour permettre au moins le passage du plateau mobile de sa première position à sa deuxième position. Cette coopération entre lesdits chanfrein permet de mettre l'extrémité du premier élément de liaison en regard de la pastille conductrice.

Selon une caractéristique de l'invention, le deuxième élément de liaison comprend un chanfrein destiné à coopérer avec un chanfrein ménagé sur la pastille conductrice pour permettre au moins le passage du plateau mobile de sa première position à sa deuxième position. Cette coopération entre lesdits chanfrein permet de mettre l'extrémité du deuxième élément de liaison en regard de la pastille conductrice.

Selon une caractéristique de l'invention, la dimension de la pastille parallèlement à l'axe principal est supérieure à la distance entre le premier élément de liaison et le deuxième élément de liaison dans la première position du plateau mobile. Il en résulte que le passage de la première position du plateau mobile à la deuxième position du plateau mobile se fait en écartant le premier élément de liaison du deuxième élément de liaison. Ainsi, on s'assure que dans la deuxième position du plateau mobile les premier et deuxième éléments de liaison sont plaqués contre la portion électriquement conductrice du plateau mobile formée par la pastille conductrice. Il convient de noter que cet écartement entre le premier élément de liaison et le deuxième élément de liaison est avantageusement permis au moyen des chanfreins susmentionnés.

Selon une caractéristique de l'invention, le dispositif de contrôle comprend au moins un élément de retour permettant au moins le passage du plateau mobile de sa deuxième position à sa première position.

Selon une caractéristique de l'invention, le dispositif de contrôle comprend au moins un organe de rappel du premier élément de liaison configuré pour maintenir les premiers éléments de liaison dans une position initiale. Cet organe de rappel permet lors du retour du plateau mobile de sa deuxième position à sa première position de rapprocher les premier et deuxième éléments de liaison l'un de l'autre. De plus, cet organe de rappel permet de s'assurer que dans la deuxième position du plateau mobile les premier et deuxième éléments de liaison soient plaqués contre la pastille conductrice.

Selon une caractéristique de l'invention, le plateau mobile est mobile en rotation autour d'un axe de rotation, cet axe de rotation du plateau mobile étant coaxial avec un axe de translation de l'organe de mise en mouvement. On comprend que le plateau mobile est apte à être entraîné en rotation autour de son axe de rotation pour permettre ou interdire une connexion électrique avec les organes de liaison électrique.

Selon une caractéristique de l'invention, l'organe de mise en mouvement s'étend au moins en partie au travers du plateau mobile. Il convient de noter que le plateau mobile s'étend dans un plan principal et que l'organe de mise en mouvement s'étend sensiblement perpendiculairement et au moins en partie à travers le plateau, par rapport audit plan principal.

L'invention porte également sur une prise de charge d'une borne de chargement permettant une connexion électrique à véhicule automobile, comprenant un système de connexion conforme à l'une quelconque des caractéristiques susmentionnées.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig.1] représente en perspective une prise de charge destinée à être connectée à une prise de réception d'un véhicule automobile :
[Fig.2] représente un dispositif de contrôle d'un système de connexion, le dispositif de contrôle comprenant un plateau mobile dans une première position interdisant la connexion électrique entre la prise de charge et la prise de réception du véhicule automobile ;
[Fig.3] représente le dispositif de contrôle représenté par la figure 2, le plateau mobile étant dans une deuxième position autorisant la connexion électrique entre la prise de charge et la prise de réception du véhicule automobile ;
[Fig.4] représente une vue locale du dispositif de contrôle lorsque le plateau mobile est dans sa première position ;
[Fig.5] représente une vue locale du dispositif de contrôle lorsque le plateau mobile est dans sa deuxième position.

Les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique.

Sur les figures, les éléments communs à plusieurs figures conservent la même référence.

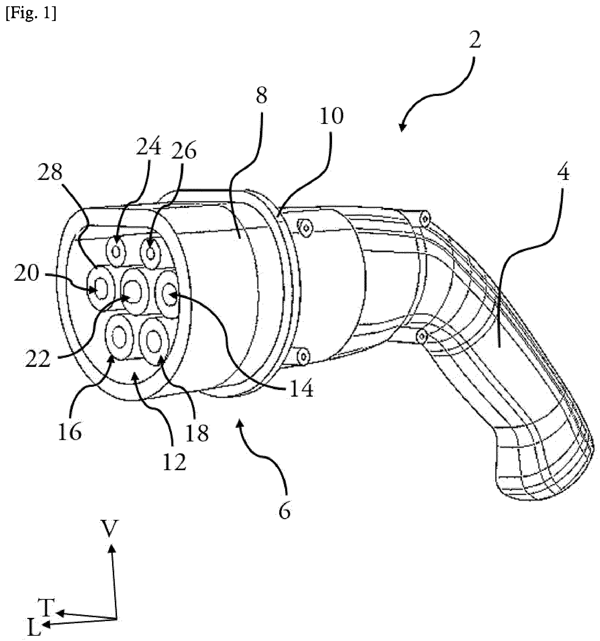

Par ailleurs, dans la description qui va suivre, on se réfèrera à une orientation fonction des axes Longitudinaux, Verticaux et Transversaux tels qu'ils sont définis arbitrairement par le trièdre L, V, T représenté sur les figures 1 à 5, la direction longitudinale correspondant à la direction d'allongement principal du système de connexion. Le choix des appellations de ces axes n'est pas limitatif de l'orientation que peut prendre le système de connexion dans son application. De plus, les traits pointillés symbolisent une vue par transparence de l'objet représenté.

La figure 1 illustre une prise de charge 2 d'une borne murale destinée à alimenter en énergie électrique un véhicule automobile. Plus précisément, dans le mode de réalisation représenté, la prise de charge 2 est un dispositif enfichable d'une borne de chargement apte à être branchée sur un véhicule électrique ou hybride.

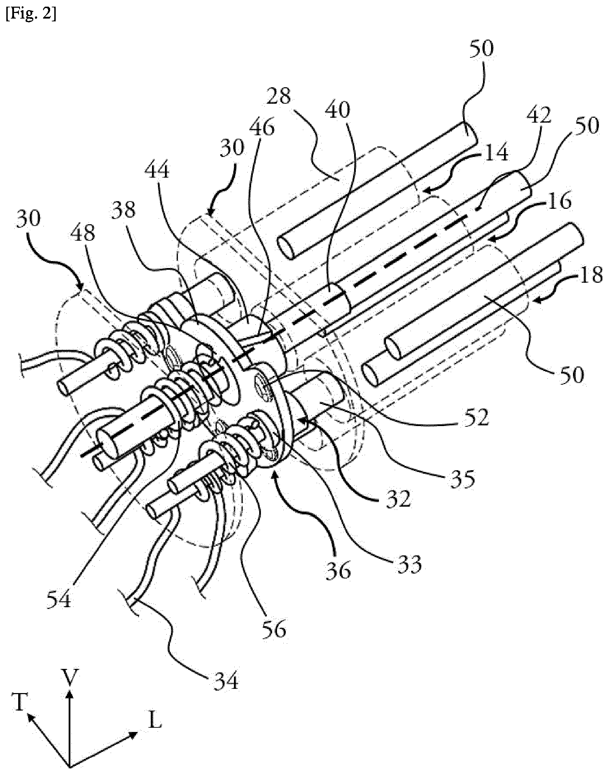

Tel que visible sur la figure 1, la prise de charge 2 comprend une gaine de protection 4 dans laquelle circule une pluralité de câbles électriques, non représentée ici, reliée par une extrémité à la borne de chargement et par une extrémité opposée libre à un système de connexion 6, plus particulièrement visible sur les figures 2 à 5.

Le système de connexion 6 est destiné à être connecté avec une prise de réception du véhicule automobile afin de permettre à un courant électrique de circuler de la borne de chargement vers les batteries du véhicule automobile, ou inversement.

Au niveau de l'extrémité libre de la prise de charge 2 comportant le système de connexion 6, la gaine de protection 4 est poursuivie par un manchon 8 s'étendant depuis l'extrémité libre jusqu'à une butée 10. Cette butée 10 est destinée à venir en contact avec un élément de la prise de réception du véhicule automobile lorsque la prise de charge 2 est connectée au véhicule automobile. Le manchon 8 délimite un volume interne 12, ouvert au niveau de l'extrémité libre de la prise de charge 2 et destiné à recevoir une forme complémentaire prévue au niveau de la prise de réception du véhicule automobile, de sorte à connecter la prise de charge 2 au véhicule automobile.

Dans le mode de réalisation représenté, la prise de charge 2 est apte à distribuer une énergie électrique triphasée. Il convient de noter que la description relative à la prise de charge 2 distribuant l'énergie électrique triphasée qui suivra s'applique *mutatis mutandis* à une distribution de l'énergie électrique monophasée.

Le système de connexion 3 comprend trois connecteurs de phase 14, 16 et 18 correspondants aux phases électriques, un connecteur neutre 20 et un connecteur de masse 22 relié à la terre. Le système de connexion 6 comprend également un connecteur de contact pilote 24 et un connecteur de contact de proximité 26 permettant d'assurer les fonctions de communication entre la prise de charge 2 et le véhicule automobile. Chacun de ces connecteurs 14, 16, 18, 20, 22, 24 et 26 s'étend dans le volume interne 12 selon une direction d'allongement principal longitudinale, c'est-à-dire parallèlement à l'axe L. On comprend que les connecteurs 14, 16, 18, 20, 22, 24 et 26 s'étendent parallèlement les uns par rapport aux autres.

Chacun des connecteurs 14, 16, 18, 20, 22, 24 et 26 comprend un tube 28, ou fût, formé d'un matériau destiné à isoler électriquement les éléments de connexion électrique du système de connexion 6.

La figure 2 illustre le système de connexion 6 de la prise de charge 2 selon un mode de réalisation de l'invention. Selon l'invention, le système de connexion 6 comprend un corps 30 et au moins un organe de liaison électrique. Cet organe de liaison électrique est configuré pour être connecté avec un terminal électrique du véhicule automobile, le terminal électrique étant ménagé dans la prise de réception du véhicule automobile. Le corps 30 forme une structure rigide supportant le système de connexion 6.

Dans le mode de réalisation représenté, le système de connexion 6 comprend une pluralité d'organes de liaison électrique 32, un desdits organes de liaison électrique 32 étant associé à au moins l'un des connecteurs de phase et neutre 14, 16, 18 et 20. Ces organes de liaison électrique 32 sont logés dans les tubes 28, chacun des connecteurs 14, 16, 18, 20 et 22 étant formé d'un organe de liaison électrique 32 logé dans un tube 28. Il convient de noter que chaque tube 28 présente des dimensions permettant de loger un organe de liaison électrique 32 en son sein.

Le contact entre la broche du terminal de la prise de réception du véhicule et l'organe de liaison électrique 32 permet de faire circuler un courant électrique entre la prise de charge 2 de la borne de chargement et la prise de réception du véhicule automobile. À cet effet, chaque organe de liaison électrique 32 est alimenté en énergie électrique au moyen d'un câble d'alimentation 34.

Le système de connexion 6 comprend également un dispositif de contrôle 36 d'une connexion électrique entre au moins un organe de liaison électrique 32 et le terminal de la prise de réception du véhicule automobile associé. Le dispositif de contrôle 36 comporte, selon l'invention, un plateau mobile 38 en rotation et un organe de mise en mouvement 40 du plateau mobile 38.

Chaque organe de liaison électrique 32 est formé d'un premier élément de liaison électrique 33 et d'un deuxième élément de liaison électrique 35, le plateau mobile 38 étant disposé entre le premier élément de liaison électrique 33 et le deuxième élément de liaison électrique 35.

Le premier élément de liaison électrique 33 est configuré pour être connecté à un réseau électrique et le deuxième élément de liaison électrique 35 est configuré pour être connecté à un terminal électrique du véhicule automobile.

Dans le mode de réalisation représenté, le premier élément de liaison électrique 33 et le deuxième élément de liaison électrique 35 qui lui est associé sont distants l'un de l'autre, selon une direction parallèle à l'axe de translation de l'organe de mise en mouvement 40, d'environ 4 mm. Une telle distance entre ces éléments de liaison électrique 33 et 35 permet d'interdire la circulation d'un courant électrique entre le premier élément de liaison électrique 33 et le deuxième élément de liaison électrique 35.

L'organe de mise en mouvement 40 est configuré pour se déplacer dans le corps 30 le long d'un axe principal 42 du dispositif de contrôle 36. Cet axe principal 42 du dispositif de contrôle 36 est parallèle à l'axe L, on comprend que l'axe principal 42 est également parallèle à la direction d'allongement principal longitudinale des connecteurs 14, 16, 18, 20, 22, 24 et 26.

L'organe de mise en mouvement 40 s'étend selon son axe de translation, c'est-à-dire parallèlement à l'axe principal 42, au travers du plateau mobile 38 et comprend un moyen de mise en rotation 44 du plateau mobile 38. Ce moyen de mise en rotation 44 s'étend selon une direction d'allongement principal parallèle à l'axe de translation de l'organe de mise en mouvement 40, c'est-à-dire parallèlement à l'axe principal 42. L'organe de mise en rotation 44 comprend au moins une rainure 46 s'étendant le long du moyen de mise en rotation 44 selon une direction sécante à l'axe de translation de l'organe de mise en mouvement 40. À titre d'exemple, la rainure 46 suit un tracé hélicoïdal.

Plus précisément, le moyen de mise en rotation 44 comprend trois rainures 46 réparties angulairement sur le pourtour du moyen de mise en rotation 44.

Chacune des rainures 46 coopère avec au moins une dent 48 du plateau mobile 38 de telle sorte que chaque dent 48 est apte à se déplacer dans la rainure 46 associée, d'une extrémité longitudinale du moyen de mise en rotation 44 à une extrémité longitudinale opposée.

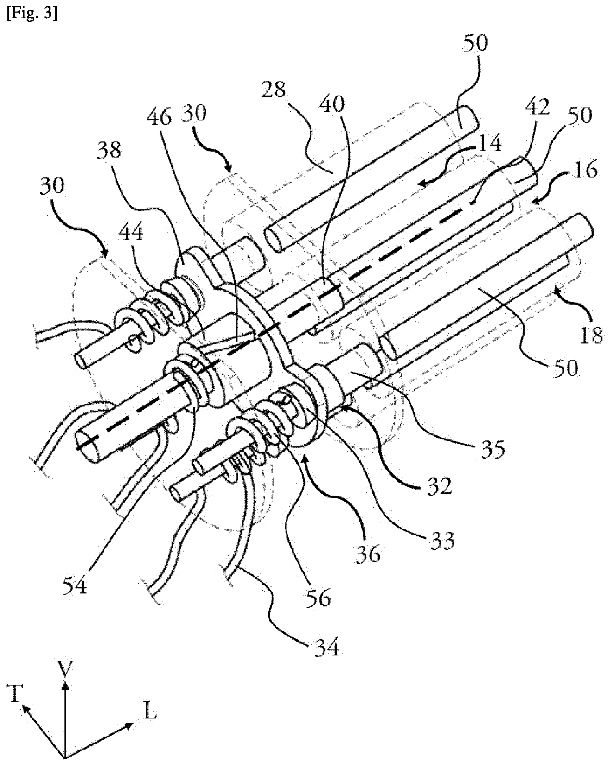

Le déplacement des dents 48 du plateau mobile 38 d'une extrémité du moyen de mise en rotation 44 à l'extrémité opposée entraîne la rotation du plateau mobile 38 autour de son axe de rotation. Plus particulièrement, le déplacement des dents 48 permet de déplacer en rotation le plateau mobile 38 d'une première position, visible sur la figure 2, à une deuxième position, visible sur la figure 3. On comprend que le déplacement des dents 48 permet plus largement de déplacer en rotation le plateau mobile 38 de sa première ou de sa deuxième position à l'autre.

Il convient de noter que, sans sortir du cadre de l'invention, une dent pourrait être ménagée sur le moyen de mise en rotation 44 et une rainure dans le plateau mobile 38 de sorte que la coopération entre la rainure et la dent provoque la mise en rotation du plateau mobile 38.

La prise de réception du véhicule comprend une pluralité de terminaux 50. Les terminaux associés aux connecteurs de phases 14, 16 et 18 et celui associé au connecteur neutre 20 sont destinés à venir en contact d'un organe de liaison électrique 32, et plus particulièrement du deuxième élément de liaison électrique 35. Le terminal 50 associé au connecteur de masse 22 est quant à lui destiné à venir au contact de l'organe de mise en mouvement 40 de telle sorte que l'insertion de ce terminal 50 entraîne la translation de l'organe de mise en mouvement 40 le long de son axe de translation.

Tel que visible sur les figures 2 et 3, le dispositif de contrôle 36 comprend un élément de retour 54 entourant l'organe de mise en mouvement 40. Cet organe de rappel 54 est plaqué par une extrémité contre le corps 30 et par une extrémité opposée contre le moyen de mise en rotation 44.

Plus précisément, l'élément de retour 54 est un ressort hélicoïdal. Lors du déplacement du plateau mobile 38 de sa première position à sa deuxième position, le ressort hélicoïdal se comprime et, lors de la déconnexion de la prise de charge 2 à la prise de réception du véhicule automobile, le plateau mobile 38 est déplacé par l'élément de retour 54 de sa deuxième position à sa première position par la force de rappel de l'élément de retour 54.

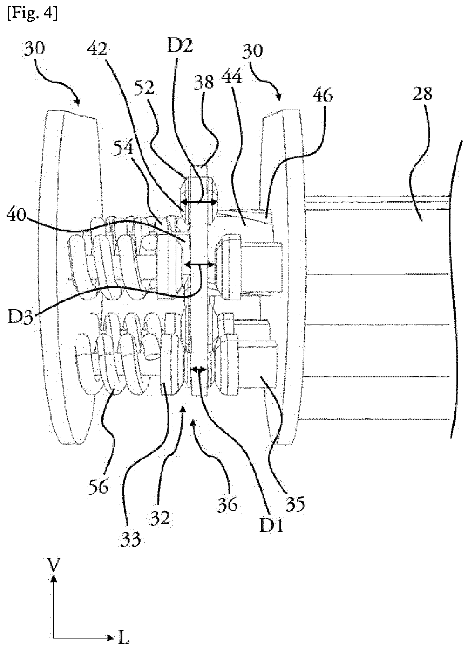

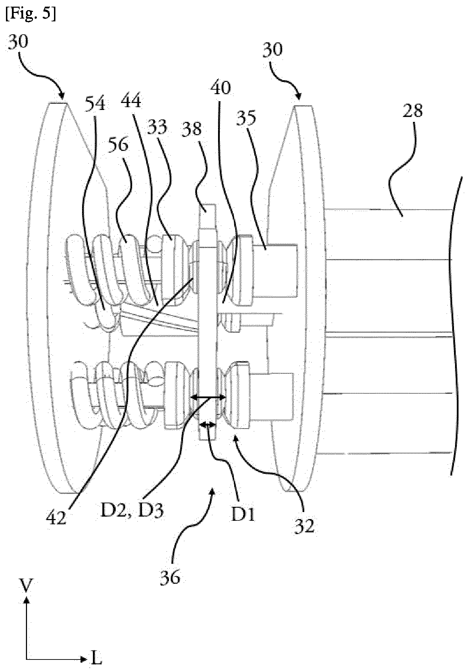

Le plateau mobile 38 comprend une portion électriquement isolante et une portion électriquement conductrice. Dans le mode de réalisation représenté, le plateau mobile 38 est formé d'un matériau électriquement isolant. Des pastilles électriquement conductrices 52, qui seront décrites plus en détail en lien avec les figures 4 et 5, sont logées dans des orifices ménagés dans la portion électriquement isolante.

Dans la première position du plateau mobile 38, visible sur la figure 2, la portion électriquement isolante du plateau mobile 38 est disposée entre les premiers éléments de liaison 33 et les deuxièmes éléments de liaison 35 associés. Dans la deuxième position du plateau mobile 38, visible sur la figure 3, la portion électriquement conductrice du plateau mobile 38 est disposée entre les premiers éléments de liaison 33 et les deuxièmes éléments de liaison 35 associés.

Lorsque le plateau mobile 38 est dans sa deuxième position, tel que représenté par la figure 3, la portion du plateau mobile 38 au contact des premier et deuxième éléments de liaison électrique 33 et 35 est la portion électriquement conductrice, formée par les pastille conductrice 52. Il convient de noter que le plateau mobile 38 comprend autant de pastilles conductrices 52 que d'organes de liaison électrique 32 formés par un premier élément de liaison électrique 33 et un deuxième élément de liaison électrique 35.

De surcroît, ces pastilles conductrices 52 sont réparties angulairement sur le plateau mobile 38 de sorte que lorsqu'une pastille conductrice 52 est interposée entre un premier élément de liaison électrique 33 et un deuxième élément de liaison électrique 35, l'ensemble des pastilles conductrices 52 sont interposées entre un premier élément de liaison électrique 33 et un deuxième élément de liaison électrique 35.

Tel qu'il sera décrit plus en détail en lien avec les figures 4 et 5, le passage du plateau mobile 38 de sa première position à sa deuxième position entraîne le déplacement des premiers éléments de liaison 33 parallèlement à l'axe principal 42. Pour permettre le rappel desdits éléments de liaison 33 dans leur position initiale, chacun des premiers éléments de liaison 33 est entouré par un organe de rappel 56 configuré pour maintenir les premiers éléments de liaison 33 dans leur position initiale.

Les figures 4 et 5 représentent une vue locale du dispositif de contrôle 36 respectivement dans la première position du plateau mobile 38 et dans la deuxième position du plateau mobile 38.

Tel qu'évoqué précédemment, le plateau mobile 38 formé d'un matériau électriquement isolant, formant les portions électriquement isolantes du plateau mobile 38, dans lequel est logée au moins une pastille électriquement conductrice 52.

Ces pastilles électriquement conductrices 52 présentent, dans le mode de réalisation représenté, une forme sensiblement circulaire et sont destinées à s'interposer entre le premier élément de liaison électrique 33 et le deuxième élément de liaison électrique 35 lorsque le plateau mobile 38 est dans sa deuxième position de telle sorte que l'organe de liaison électrique 32 puisse être électriquement reliée avec le terminal 50 de la prise de réception associé.

Ces pastilles conductrice 52 sont logées dans l'épaisseur du plateau mobile 38 en faisant saillie de part et d'autre de la portion électriquement isolante du plateau mobile 38.

Dans la première position du plateau mobile 38 la distance entre l'extrémité du premier élément de liaison 33 et le plateau mobile 38, et plus spécifiquement la portion électriquement isolante du plateau mobile 38, est d'au moins 1 mm. De façon similaire, dans cette première position du plateau mobile 38 la distance entre l'extrémité du deuxième élément de liaison 3 et le plateau mobile 38, et plus spécifiquement la portion électriquement isolante du plateau mobile 38, est d'au moins 1 mm.

Plus spécifiquement, le plateau mobile 38 présente une épaisseur D1 mesuré parallèlement à l'axe principal 42 d'environ 2 mm. Les pastilles conductrice 52 s'étendent quant à elles parallèlement à l'axe principal 42 d'une extrémité à une extrémité opposée sur une distance de conduction D2 d'environ 5 mm. On comprend que les pastilles conductrices 52 présentent une dimension mesurée parallèlement à l'axe principal 42 supérieure à l'épaisseur du plateau mobile 38.

En outre, dans la première position du plateau mobile 38, une extrémité des premiers éléments de liaison 33 proximale du plateau mobile 38 est distante d'une extrémité des deuxièmes éléments de liaison 35 associées proximale du plateau mobile 38 d'une distance de séparation D3 d'environ 4 mm. On comprend que les premiers éléments de liaison 33 sont distants des deuxièmes éléments de liaison 35 associés d'une distance supérieure à l'épaisseur du plateau mobile 38. Il en résulte que dans la première position du plateau mobile 38, l'extrémité des premiers éléments de liaison 33 et l'extrémité des deuxièmes éléments de liaison 35 proximales du plateau mobiles 38 ne sont pas au contact de ce dernier.

Tel que visible sur la figure 5, dans la deuxième position du plateau mobile 38, la distance de séparation D3 entre une extrémité des premiers éléments de liaison 33 proximale du plateau mobile 38 et une extrémité des deuxièmes éléments de liaison 35 associées proximale du plateau mobile 38 est égale à la distance de conduction D2 des pastilles conductrice 52.

En effet, le passage du plateau mobile 38 de sa première position à sa deuxième position conduit les pastilles conductrices 52 à être disposées entre un premier élément de liaison 33 et un deuxième élément de liaison 35 d'un organe de liaison 32. Cette interposition des pastilles conductrices 52 se fait en écartant les premiers éléments de liaison des deuxièmes éléments de liaison parallèlement à l'axe principal 42.

On comprend que le passage du plateau mobile dans sa deuxième position conduit l'extrémité des premiers éléments de liaison 33 et l'extrémité des deuxièmes éléments de liaison 35 à venir au contact de la portion électriquement conductrice du plateau mobile 38. En d'autres termes, dans la deuxième position du plateau mobile 38 les deuxièmes éléments de liaison 35 sont alimentés électriquement.

L'écartement des premiers éléments de liaison 33 des deuxièmes éléments de liaison 35 et plus largement l'interposition des pastilles conductrices 52 entre lesdits éléments de liaison 33, 35 est permise par la coopération entre un chanfrein ménagé au niveau de l'extrémité proximale du plateau mobile des premiers et deuxièmes éléments de liaison 33, 35 et un chanfrein ménagé sur chacune des extrémités des pastilles conductrices 52.

Il apparaît dans la description des différents modes et exemples de réalisation qui a précédé que l'invention atteint bien le but qu'elle s'était fixé en proposant un système de connexion apte à interdire une connexion électrique avec un corps étranger introduit dans un connecteur distinct du connecteur de masse.

## Revendications

1. Système de connexion (6) destiné à se connecter électriquement à un véhicule automobile, le système de connexion (6) comprenant au moins un organe de liaison (32) formé d'un premier élément de liaison (33) configuré pour être connecté à un réseau électrique et d'un deuxième élément de liaison (35) configuré pour être connecté à un terminal (50) électrique du véhicule automobile, le système de connexion (6) comprenant au moins un dispositif de contrôle (36) d'une connexion électrique entre au moins l'organe de liaison électrique (32) et le terminal (50), le dispositif de contrôle (36) comprenant au moins un plateau mobile (38) en rotation et un organe de mise en mouvement (40) du plateau mobile (38), le plateau mobile (38) étant disposé entre le premier élément de liaison (33) et le deuxième élément de liaison (35), le plateau mobile (38) comprenant au moins une portion électriquement isolante et une portion électriquement conductrice, le plateau mobile (38) étant apte à prendre une première position dans laquelle la portion électriquement isolante est disposée entre le premier élément de liaison (33) et le deuxième élément de liaison (35) **caractérisé en ce que** le plateau mobile (38) est en outre apte à prendre une deuxième position dans laquelle la portion électriquement conductrice est disposée entre le premier élément de liaison (33) et le deuxième élément de liaison (35), la distance de séparation (D3) séparant une extrémité du premier élément de liaison (33) et une extrémité du deuxième élément de liaison (35) est supérieure à une épaisseur (D1) de la portion électriquement isolante du plateau mobile.

2. Système de connexion (6) selon la revendication précédente, dans lequel l'extrémité du premier élément de liaison (33) et l'extrémité du deuxième élément de liaison (35) sont au contact de la portion électriquement conductrice lorsque le plateau mobile (38) est dans sa deuxième position.

3. Système de connexion (6) selon l'une quelconque des revendications précédentes, dans lequel la distance entre l'extrémité du premier élément de liaison (33) et la portion électriquement isolante du plateau mobile (38) et/ou la distance entre l'extrémité du deuxième élément de liaison (35) et la portion électriquement isolante du plateau mobile (38) est d'au moins 1 mm.

4. Système de connexion (6) selon l'une quelconque des revendications précédentes, dans lequel l'organe de mise en mouvement (40) est apte à se déplacer le long d'un axe principal (42), le premier élément de liaison (33) et le deuxième élément de liaison (35) s'étendant parallèlement à l'axe principal (42).

5. Système de connexion (6) selon l'une quelconque des revendications précédentes, dans lequel la portion électriquement conductrice du plateau mobile (38) est formée d'au moins une pastille conductrice (52) logée dans l'épaisseur (D1) du plateau mobile (38), ladite pastille conductrice (52) faisant saillie de part et d'autre de la portion électriquement isolante du plateau mobile (38).

6. Système de connexion (6) selon l'une quelconque des revendications précédentes pris en combinaison avec la revendication 5, dans lequel une épaisseur de la pastille conductrice (52) est supérieure à la distance séparant une extrémité du premier élément de liaison (33) et une extrémité du deuxième élément de liaison (35) lorsque le plateau mobile (38) est dans sa première position.

7. Système de connexion (6) selon l'une quelconque des revendications précédentes pris en combinaison avec la revendication 5, dans lequel le premier élément de liaison (33) comprend un chanfrein destiné à coopérer avec un chanfrein ménagé sur la pastille conductrice (52) pour permettre au moins le passage du plateau mobile (38) de sa première position à sa deuxième position.

8. Système de connexion (6) selon l'une quelconque des revendications précédentes pris en combinaison avec la revendication 5, dans lequel le deuxième élément de liaison (35) comprend un chanfrein destiné à coopérer avec un chanfrein ménagé sur la pastille conductrice (52) pour permettre au moins le passage du plateau mobile (38) de sa première position à sa deuxième position.

9. Système de connexion (6) selon l'une quelconque des revendications précédentes, dans lequel le dispositif de contrôle (36) comprend au moins un élément de retour (54) permettant au moins le passage du plateau mobile (38) de sa deuxième position à sa première position.

10. Système de connexion (6) selon l'une quelconque des revendications précédentes, dans lequel le dispositif de contrôle (36) comprend au moins un organe de rappel (56) du premier élément de liaison (33) configuré pour maintenir les premiers éléments de liaison (33) dans une position initiale.

11. Système de connexion (6) selon l'une quelconque des revendications précédentes, dans lequel le plateau mobile (38) est mobile en rotation autour d'un axe de rotation, cet axe de rotation du plateau mobile (38) étant coaxial avec un axe de translation de l'organe de mise en mouvement (40).

12. Système de connexion (6) selon l'une quelconque des revendications précédentes, dans lequel l'organe de mise en mouvement (40) s'étend au moins en partie au travers du plateau mobile (38).

13. Prise de charge (2) d'une borne de chargement permettant une connexion électrique à véhicule automobile, comprenant un système de connexion (6) selon l'une quelconque des revendications 1 à 12.

## Patentansprüche

1. Verbindungssystem (6), welches dazu bestimmt ist, mit einem Kraftfahrzeug elektrisch verbunden zu werden, wobei das Verbindungssystem (6) mindestens ein Verbindungsorgan (32) umfasst, das von einem ersten Verbindungselement (33), das dafür ausgelegt ist, mit einem Stromnetz verbunden zu werden, und einem zweiten Verbindungselement (35), das dafür ausgelegt ist, mit einem elektrischen Anschluss (50) des Kraftfahrzeugs verbunden zu werden, gebildet wird, wobei das Verbindungssystem (6) mindestens eine Steuervorrichtung (36) einer elektrischen Verbindung zwischen mindestens dem elektrischen Verbindungsorgan (32) und dem Anschluss (50) umfasst, wobei die Steuervorrichtung (36) mindestens eine drehbewegliche Platte (38) und ein Bewegungsorgan (40) der beweglichen Platte (38) umfasst, wobei die bewegliche Platte (38) zwischen dem ersten Verbindungselement (33) und dem zweiten Verbindungselement (35) angeordnet ist, wobei die bewegliche Platte (38) mindestens einen elektrisch isolierenden Abschnitt und einen elektrisch leitfähigen Abschnitt umfasst, wobei die bewegliche Platte (38) in der Lage ist, eine erste Position einzunehmen, in welcher der elektrisch isolierende Abschnitt zwischen dem ersten Verbindungselement (33) und dem zweiten Verbindungselement (35) angeordnet ist, **dadurch gekennzeichnet, dass** die bewegliche Platte (38) außerdem in der Lage ist, eine zweite Position einzunehmen, in welcher der elektrisch leitfähige Abschnitt zwischen dem ersten Verbindungselement (33) und dem zweiten Verbindungselement (35) angeordnet ist, wobei der Trennungsabstand (D3), der ein Ende des ersten Verbindungselements (33) und ein Ende des zweiten Verbindungselements (35) trennt, größer als eine Dicke (D1) des elektrisch isolierenden Abschnitts der beweglichen Platte ist.

2. Verbindungssystem (6) nach dem vorhergehenden Anspruch, wobei sich das Ende des ersten Verbindungselements (33) und das Ende des zweiten Verbindungselements (35) in Kontakt mit dem elektrisch leitfähigen Abschnitt befinden, wenn sich die bewegliche Platte (38) in ihrer zweiten Position befindet.

3. Verbindungssystem (6) nach einem der vorhergehenden Ansprüche, wobei der Abstand zwischen dem Ende des ersten Verbindungselements (33) und dem elektrisch isolierenden Abschnitt der beweglichen Platte (38) und/oder der Abstand zwischen dem Ende des zweiten Verbindungselements (35) und dem elektrisch isolierenden Abschnitt der beweglichen Platte (38) mindestens 1 mm beträgt.

4. Verbindungssystem (6) nach einem der vorhergehenden Ansprüche, wobei das Bewegungsorgan (40) in der Lage ist, sich entlang einer Hauptachse (42) zu verschieben, wobei das erste Verbindungselement (33) und das zweite Verbindungselement (35) sich parallel zu der Hauptachse (42) erstrecken.

5. Verbindungssystem (6) nach einem der vorhergehenden Ansprüche, wobei der elektrisch leitfähige Abschnitt der beweglichen Platte (38) von mindestens einem leitfähigen Anschlussstück (52) gebildet wird, das in der Dicke (D1) der beweglichen Platte (38) aufgenommen ist, wobei das leitfähige Anschlussstück (52) beiderseits des elektrisch isolierenden Abschnitts der beweglichen Platte (38) herausragt.

6. Verbindungssystem (6) nach einem der vorhergehenden Ansprüche in Kombination mit Anspruch 5, wobei eine Dicke des leitfähigen Anschlussstücks (52) größer als der Abstand ist, der ein Ende des ersten Verbindungselements (33) und ein Ende des zweiten Verbindungselements (35) trennt, wenn sich die bewegliche Platte (38) in ihrer ersten Position befindet.

7. Verbindungssystem (6) nach einem der vorhergehenden Ansprüche in Kombination mit Anspruch 5, wobei das erste Verbindungselement (33) eine Abschrägung umfasst, die dazu bestimmt ist, mit einer Abschrägung zusammenzuwirken, die an dem leitfähigen Anschlussstück (52) ausgebildet ist, um wenigstens den Übergang der beweglichen Platte (38) aus ihrer ersten Position in ihre zweite Position zu ermöglichen.

8. Verbindungssystem (6) nach einem der vorhergehenden Ansprüche in Kombination mit Anspruch 5, wobei das zweite Verbindungselement (35) eine Abschrägung umfasst, die dazu bestimmt ist, mit einer Abschrägung zusammenzuwirken, die an dem leitfähigen Anschlussstück (52) ausgebildet ist, um wenigstens den Übergang der beweglichen Platte (38) aus ihrer ersten Position in ihre zweite Position zu ermöglichen.

9. Verbindungssystem (6) nach einem der vorhergehenden Ansprüche, wobei die Steuervorrichtung (36) mindestens ein Rückstellelement (54) umfasst, das wenigstens den Übergang der beweglichen Platte (38) aus ihrer zweiten Position in ihre erste Position ermöglicht.

10. Verbindungssystem (6) nach einem der vorhergehenden Ansprüche, wobei die Steuervorrichtung (36) mindestens ein Rückstellorgan (56) des ersten Verbindungselements (33) umfasst, das dafür ausgelegt ist, die ersten Verbindungselemente (33) in einer Ausgangsposition zu halten.

11. Verbindungssystem (6) nach einem der vorhergehenden Ansprüche, wobei die bewegliche Platte (38) drehbeweglich um eine Drehachse ist, wobei diese Drehachse der beweglichen Platte (38) koaxial mit einer Translationsachse des Bewegungsorgans (40) ist.

12. Verbindungssystem (6) nach einem der vorhergehenden Ansprüche, wobei sich das Bewegungsorgan (40) wenigstens zum Teil durch die bewegliche Platte (38) hindurch erstreckt.

13. Ladestecker (2) einer Ladestation, welcher eine elektrische Verbindung mit einem Kraftfahrzeug ermöglicht und ein Verbindungssystem (6) nach einem der Ansprüche 1 bis 12 umfasst.

## Claims

1. Connection system (6) intended to be electrically connected to a motor vehicle, the connection system (6) comprising at least one connection member (32) formed by a first connection element (33) configured to be connected to an electrical network and a second connection element (35) configured to be connected to an electrical terminal (50) of the motor vehicle, the connection system (6) comprising at least one device (36) for controlling an electrical connection between at least the electrical connection member (32) and the terminal (50), the control device (36) comprising at least one movable plate (38) that is rotatable and a drive member (40) for moving the movable plate (38), the movable plate (38) being arranged between the first connection element (33) and the second connection element (35), the movable plate (38) comprising at least one electrically insulating portion and one electrically conductive portion, the movable plate (38) being capable of assuming a first position in which the electrically insulating portion is arranged between the first connection element (33) and the second connection element (35), **characterized in that** the movable plate (38) is also capable of assuming a second position in which the electrically conductive portion is arranged between the first connection element (33) and the second connection element (35), the separation distance (D3) separating an end of the first connection element (33) and an end of the second connection element (35) is greater than a thickness (D1) of the electrically insulating portion of the movable plate.

2. Connection system (6) according to the preceding claim, wherein the end of the first connection element (33) and the end of the second connection element (35) are in contact with the electrically conductive portion when the movable plate (38) is in its second position.

3. Connection system (6) according to any one of the preceding claims, wherein the distance between the end of the first connection element (33) and the electrically insulating portion of the movable plate (38) and/or the distance between the end of the second connection element (35) and the electrically insulating portion of the movable plate (38) is at least 1 mm.

4. Connection system (6) according to any one of the preceding claims, wherein the drive member (40) is movable along a main axis (42), the first connection element (33) and the second connection element (35) extending parallel to the main axis (42).

5. Connection system (6) according to any one of the preceding claims, wherein the electrically conductive portion of the movable plate (38) is formed by at least one conductive pad (52) housed in the thickness (D1) of the movable plate (38), said conductive pad (52) projecting from both sides of the electrically insulating portion of the movable plate (38).

6. Connection system (6) according to any one of the preceding claims in combination with Claim 5, wherein a thickness of the conductive pad (52) is greater than the distance separating an end of the first connection element (33) and an end of the second connection element (35) when the movable plate (38) is in its first position.

7. Connection system (6) according to any one of the preceding claims in combination with Claim 5, wherein the first connection element (33) comprises a chamfer intended to cooperate with a chamfer formed on the conductive pad (52) to allow the movable plate (38) to move at least from its first position to its second position.

8. Connection system (6) according to any one of the preceding claims in combination with Claim 5, wherein the second connection element (35) comprises a chamfer intended to cooperate with a chamfer formed on the conductive pad (52) to allow the movable plate (38) to move at least from its first position to its second position.

9. Connection system (6) according to any one of the preceding claims, wherein the control device (36) comprises at least one biasing element (54) allowing the movable plate (38) to move at least from its second position to its first position.

10. Connection system (6) according to any one of the preceding claims, wherein the control device (36) comprises at least one biasing member (56) of the first connection element (33) configured to hold the first connection elements (33) in an initial position.

11. Connection system (6) according to any one of the preceding claims, wherein the movable plate (38) is rotatable about a rotation axis, this rotation axis of the movable plate (38) being coaxial with a translation axis of the drive member (40).

12. Connection system (6) according to any one of the preceding claims, wherein the drive member (40) extends at least in part through the movable plate (38).

13. Charging connector (2) of a charging station enabling electrical connection to a motor vehicle, comprising a connection system (6) according to any one of Claims 1 to 12.
